# EUROPÄISCHE PATENTSCHRIFT

(11) **EP 3 047 424 B1**
(45) Veröffentlichungstag und Bekanntmachung des Hinweises auf die Patenterteilung: **21.03.2018**
(21) Anmeldenummer: 14766472.6
(22) Anmeldetag: 16.09.2014
(51) Int. Cl.: G06K 9/00, G06K 9/20, G06K 9/62, G07C 9/00

(54) **VORRICHTUNG, SYSTEM UND VERFAHREN ZUM IDENTIFIZIEREN EINER PERSON**
APPARATUS, SYSTEM AND METHOD FOR IDENTIFYING A PERSON
DISPOSITIF, SYSTÈME ET PROCÉDÉ D'IDENTIFICATION D'UN INDIVIDU

(30) Priorität: 19.09.2013 DE 102013015600
(43) Veröffentlichungstag der Anmeldung: 27.07.2016
(73) Patentinhaber: Mühlbauer GmbH & Co. KG, 93426 Roding (DE)
(72) Erfinder: NIEBLING, Gerhard, 93052 Regensburg (DE); MIEHLICH, Rainer, 82024 Taufkirchen (DE)
(74) Vertreter: Schmidt, Steffen J.
(86) Internationale Anmeldenummer: PCT/EP2014/069649
(87) Internationale Veröffentlichungsnummer: WO 2015/040001

(56) Entgegenhaltungen:
- EP-A1- 2 402 914
- WO-A1-2005/119571
- WO-A1-2005/119601
- WO-A1-2007/028374
- DE-A1-102008 053 395
- US-A1- 2004 005 086
- US-A1- 2006 102 843
- US-A1- 2008 246 917
- US-A1- 2011 277 518
- US-B1- 6 781 127
- US-B2- 6 920 236
- US-B2- 7 365 771
- LIN SUN ET AL: "TIR/VIS Correlation for Liveness Detection in Face Recognition", 29. August 2011 (2011-08-29), COMPUTER ANALYSIS OF IMAGES AND PATTERNS, SPRINGER BERLIN HEIDELBERG, BERLIN, HEIDELBERG, PAGE(S) 114 - 121, XP019162215, ISBN: 978-3-642-23677-8 das ganze Dokument
- ABIANTUN R ET AL: "Automatic Eye-Level Height System for Face and Iris Recognition Systems", AUTOMATIC IDENTIFICATION ADVANCED TECHNOLOGIES, 2005. FOURTH IEEE WORK SHOP ON BUFFALO, NY, USA 17-18 OCT. 2005, PISCATAWAY, NJ, USA,IEEE, 17. Oktober 2005 (2005-10-17), Seiten 155-159, XP010856514, ISBN: 978-0-7695-2475-7

## Beschreibung

### Hintergrund

Hier wird eine Vorrichtung zum Identifizieren einer Person beschrieben. Insbesondere wird eine Vorrichtung zum Identifizieren einer Person beschrieben, die eine Realbildkamera zum Erfassen eines Reflexionsbilds eines Gesichts der Person im sichtbaren Spektralbereich und eine Wärmebildkamera zum Erfassen eines Infrarot-Emissionsbilds des Gesichts der Person aufweist. Die Vorrichtung weist außerdem eine Realbildauswertung und eine Infrarotbildauswertung auf und die Realbildkamera ist dazu eingerichtet, das Reflexionsbild in Form von Reflexionsbilddaten an die Realbildauswertung zu übermitteln, und die Wärmebildkamera ist dazu eingerichtet, das Infrarot-Emissionsbild in Form von Infrarotbilddaten an die Infrarotbildauswertung zu übermitteln. Die Realbildauswertung ist dazu eingerichtet aus den Reflexionsbilddaten erste biometrische Merkmale des Gesichts zu ermitteln. Es wird ferner ein Verfahren, ein System sowie ein Computerprogrammprodukt zum Identifizieren einer Person sowie ein Datenträger, auf dem das Computerprogrammprodukt gespeichert ist, beschrieben.

Solche Vorrichtungen werden beispielsweise an Zugängen zu Sicherheitsbereichen, insbesondere an Zugängen zu Banken oder Flughäfen, oder allgemein bei Staatsgrenzen zur Grenzkontrolle eingesetzt. Bei einer derartigen Zugangskontrolle zum Sicherheitsbereich eines Flughafens ist beispielsweise vorgesehen, dass sich Personen, die beabsichtigen, den Sicherheitsbereich zu betreten, zunächst mit ihrem elektronischen Dokument (beispielsweise einem elektronischen Reisepass) ausweisen. Dabei werden für eine Identität der Person charakteristische Daten aus dem elektronischen Reisepass ausgelesen. Darüber hinaus werden mit der Vorrichtung ebenfalls für die Person charakteristische Daten ermittelt. Anhand eines sogenannten Personenabgleichs werden anschließend die ausgelesenen Daten mit den durch die Vorrichtung ermittelten Daten verglichen, um festzustellen, ob die beiden Datensätze einander in ausreichendem Maße entsprechen. Mit anderen Worten, anhand eines Vergleichs der für die Identität der Person auf dem elektronischen Dokument gespeicherten charakteristischen Daten mit den anhand der Vorrichtung ermittelten Daten wird ermittelt, ob die Person tatsächlich die ist, als die sie sich mit ihrem Reisepass ausgewiesen hat. Im Fall eines positiven Abgleichergebnisses wird der Person dann Zutritt zu dem Sicherheitsbereich gewährt, wohingegen die Person abgewiesen wird, falls das Abgleichergebnis negativ ausfällt.

Herkömmlicherweise handelt es sich bei den für die Person charakteristischen Daten um elektronische Bilder der Hautoberfläche der Fingerendglieder der Person ("Fingerabdrücke") oder um elektronische zwei- oder dreidimensionale Farbbilder des Gesichts der Person. Personen sind anhand solcher Daten mit an Sicherheit grenzender Wahrscheinlichkeit eindeutig bestimmt. Die Bilder sind beispielsweise auf Chips in RFID-Transpondern, die in dem elektronischen Dokument eingeschweißt sind, oder in mit der Vorrichtung verbundenen Datenbanken gespeichert und können von der Vorrichtung empfangen werden. Alternativ können jedoch nicht die Bilder selbst, sondern aus den Bildern ermittelte, sogenannte biometrische Daten auf dem Chip oder in der Datenbank gespeichert sein.

### Stand der Technik

Ein biometrisches Identifizierungssystem ist aus dem Dokument US 6920236 B2 bekannt. Ein Subjekt stellt seine anatomischen Merkmale einem Doppelband-Bildwandler bereit. Beispielsweise offenbart es sein Gesicht einer Kamera, seinen Fingerabdruck einem Scanner oder sein Auge einem Iris-Bildgebungssystem. Ein Infrarot-Analysierungs- / Normierungsmodul und ein visuelles Analysierungs- / Normierungsmodul verarbeiten entsprechende Bildsequenzen einer Anzahl an Bildern von dem Bildwandler, um die Bilder zur Weiterverarbeitung zu normieren. Merkmalsextrahierer verarbeiten die Bilder, um solche Merkmale zu extrahieren, die für das Bilden einer bestimmten Biometrie zu verwenden sind. Charakterisierer formatieren die Daten, um eine Auswahl bestimmter Teile einer Datenbank zu bilden, die zu einer Identifizierung des Subjekts führen könnten. Potentielle Übereinstimmungen werden dann durch Korrelieren eines zuvor verwandelten Ergebnisses eines Bildpaares des Subjekts mit verwandelten entsprechenden Bildern aus der Datenbank gegengeprüft. Dieses und andere herkömmliche Identifizierungssysteme haben jedoch den Nachteil, dass sie mittels ausgedruckter Bilder, mittels von Personen getragenen (dreidimensionalen) Latexmasken oder mittels Bildern, die auf elektronischen Displays dargestellt sind, leicht getäuscht werden können. Letzteres gilt insbesondere, wenn die Bilder auf elektronischen Displays von Tablet-PCs animiert dargestellt werden.

Das Dokument US 2004/005086 A1 offenbart ein biometrisches Identifizierungssystem, welches das Gesicht einer Person sowohl im sichtbaren Spektralbereich als auch im Infrarotbereich erfasst.

### Zu lösendes Problem

Demgegenüber besteht das zu lösende Problem darin, eine Vorrichtung, ein Verfahren, ein System, ein Computerprogrammprodukt und einen Datenträger, auf dem ein derartiges Programmprodukt gespeichert ist, bereitzustellen, um die Überwindungssicherheit bei der Identifizierung von Personen wirkungsvoll, aber dennoch ohne die Person zu belasten, zu steigern.

### Vorgeschlagene Lösung

Das Problem wird durch eine Vorrichtung zum Identifizieren einer Person nach Anspruch 1 gelöst. Darüber hinaus wird das Problem durch ein Verfahren zum Identifizieren einer Person nach Anspruch 6, ein System zum Identifizieren einer Person nach Anspruch 12 sowie einen Datenträger nach Anspruch 14 gelöst.

Die Vorrichtung zum Identifizieren einer Person umfasst eine Realbildkamera zum Erfassen eines Reflexionsbilds eines Gesichts der Person im sichtbaren Spektralbereich und eine Wärmebildkamera zum Erfassen eines Infrarot-Emissionsbilds des Gesichts der Person. Die Vorrichtung weist außerdem eine Realbildauswertung und eine Infrarotbildauswertung auf und die Realbildkamera ist dazu eingerichtet, das Reflexionsbild in Form von Reflexionsbilddaten an die Realbildauswertung zu übermitteln, und die Wärmebildkamera ist dazu eingerichtet, das Infrarot-Emissionsbild in Form von Infrarotbilddaten an die Infrarotbildauswertung zu übermitteln. Die Realbildauswertung ist dazu eingerichtet, aus den Reflexionsbilddaten erste biometrische Merkmale des Gesichts zu ermitteln, ein Referenzbild mit einer Personen-Identifikation zu empfangen, aus diesem Referenzbild zweite biometrische Merkmale zu ermitteln, und, wenn die ersten und zweiten biometrischen Merkmale in einem vorbestimmten Maß übereinstimmen, die Personen-Identifikation einer Ausgabesteuerung bereitzustellen. Die Infrarotbildauswertung ist hingegen dazu eingerichtet, eine Temperaturverteilung aus den Infrarotbilddaten zu ermitteln und zu bestimmen, ob die Temperaturverteilung zumindest teilweise einer Temperaturverteilung im Gesicht einer lebendigen Person zumindest nahekommt, und wenn dies der Fall ist, die Ausgabesteuerung anzuweisen, die Personen-Identifikation auszugeben. Die Realbildkamera und die Wärmebildkamera sind jeweils vorzugsweise Digitalkameras.

Es wird somit anhand der Infrarotbilddaten ermittelt, ob das Reflexionsbild (Realbild) und das Infrarot-Emissionsbild (Wärmebild) von einer lebendigen Person stammen oder ob zum Beispiel mittels einer Latexmaske oder eines vor die Kamera gehaltenen Bildes des Gesichts einer Person versucht wird, die Vorrichtung zu täuschen und dadurch unberechtigt Zugang zu einem Sicherheitsbereich zu erlangen. Dies ist möglich, weil die Temperaturverteilung im Gesicht einer lebendigen Person charakteristische Eigenschaften aufweist. Im Gesicht einer lebendigen Person ist die Temperaturverteilung relativ isotrop, d.h. es existieren üblicherweise keine unverhältnismäßig warmen Flecken oder Bereiche, die eine physiologische Mindesttemperatur unterschreiten. Bei einer gesunden Person beträgt diese physiologische Mindesttemperatur im Gesicht üblicherweise rund 35 Grad Celsius. Die Infrarotbildauswertung würde daher vorzugsweise bei Temperaturwerten (zumindest in Teilen des Gesichts) unter 30 Grad Celsius bestimmen, dass die ermittelte Temperaturverteilung nicht einer Temperaturverteilung im Gesicht einer lebendigen Person nahekommt. Die hier vorgestellte Lösung erlaubt eine höhere Validität des Identifizierungsergebnisses. Mit anderen Worten erhöht sich die Wahrscheinlichkeit, dass die identifizierte Person tatsächlich diejenige ist, welche sie gemäß der Personen-Identifikation sein soll. Optional ist die Infrarotbildauswertung ferner dazu eingerichtet, eine Umgebungstemperatur beim Bestimmen, ob die Temperaturverteilung einer Temperaturverteilung im Gesicht einer lebendigen Person nahekommt, zu berücksichtigen. Dies ist insbesondere von Vorteil, wenn die Vorrichtung in unbeheizten oder überheizten Umgebungen eingesetzt wird.

Vorzugsweise können die Reflexionsbilddaten des Reflexionsbilds und die Infrarotbilddaten des Infrarot-Emissionsbilds zeitgleich erfasst und parallel ausgewertet werden. Die Realbildkamera und die Wärmebildkamera nehmen denselben Bildbereich auf, wodurch die Bilddaten aus der Realbildkamera und der Wärmebildkamera bzw. die Pixel der beiden Bilder zum Weiterverarbeiten auf einfache Weise überlagert werden können. Mit anderen Worten werden die Reflexionsbilddaten und die Infrarotbilddaten vorzugsweise nicht einzeln nacheinander, sondern parallel weiterverarbeitet, sodass die Realbildauswertung und die Infrarotbildauswertung zusammenwirken können. Durch die zeit- und positionsgleiche Überlagerung der Bilddaten können gezielt Wärmeinformationen mit biometrischen Informationen des Gesichts, betreffend Stirn, Augen, Wangen, Nase, Mund, Gesichtsform oder dergleichen, zur Auswertung in Beziehung gesetzt werden. Vorzugsweise können Positionsdaten von Merkmalen des Reflexionsbilds zur Überlagerung an die Infrarotbildauswertung übermittelt werden. Dadurch kann erkannt werden, ob das Reflexionsbild und das Infrarot-Emissionsbild von einer lebendigen Person stammen, was Täuschungen der Auswertung der Reflexionsbilddaten durch u.a. Teilabdeckungen des Gesichts verhindern kann.

Die Infrarotbildauswertung ist dazu eingerichtet zu bestimmen, ob ein Temperaturwert aus der Temperaturverteilung von einem vorbestimmten Temperatur-Schwellenwert nicht weiter abweicht, als ein vorbestimmter Temperatur-Toleranzwert. Die Infrarotbildauswertung kann ferner dazu eingerichtet sein, aus der Temperaturverteilung ein Temperatur-Gradientenfeld zu ermitteln und zu bestimmen, ob ein Betragswert aus dem Temperatur-Gradientenfeld von einem vorbestimmten Temperaturgradient-Schwellenwert nicht weiter abweicht, als ein vorbestimmter Temperaturgradient-Toleranzwert. Dies ist insbesondere von Vorteil, wenn die Person nur Teile des Gesichts (zum Beispiel durch eine Latexmaske) abdeckt. Bei den Übergängen zwischen dem Gesicht (z.B. Mund- oder Augenpartien) und der Latexmaske nimmt der Temperaturgradient einen hohen Wert an, sodass mit hoher Sicherheit das Vorliegen einer Täuschung bestimmt werden kann. Dies ist selbst dann der Fall, wenn die Latexmaske bereits mehrere Minuten auf dem Kopf der Person aufgesetzt ist.

Darüber hinaus kann die Realbildauswertung dazu eingerichtet sein, aus den Reflexionsbilddaten jeweils eine Position zumindest eines im Gesicht ausgeprägten Merkmals zu bestimmen und diese Position/en der Infrarotbildauswertung zu übermitteln, wobei der Temperaturwert an zumindest einer dieser Positionen von dem vorbestimmten Temperatur-Schwellenwert nicht weiter abweicht, als der vorbestimmte Temperatur-Toleranzwert, und/oder wobei der Betragswert aus dem Temperatur-Gradientenfeld von einem vorbestimmten Temperaturgradient-Schwellenwert nicht weiter abweicht, als ein vorbestimmter Temperaturgradient-Toleranzwert. In diesem Fall wird auf der Grundlage eines Vergleiches zwischen einem Temperaturwert beziehungsweise Temperaturgradient-Betragswert und einem entsprechenden Schwellenwert bestimmt, ob die Temperaturverteilung zumindest teilweise einer Temperaturverteilung im Gesicht einer lebendigen Person zumindest nahekommt. Das im Gesicht ausgeprägte Merkmal kann beispielsweise ein Auge, eine Nase, ein Mund, eine Wange oder eine Stirn der Person sein. Alternativ kann dies auch nur ein Teil, beispielsweise ein Randabschnitt eines dieser Merkmale anstatt des gesamten Merkmals sein. Vorteilhafterweise kann dadurch die Täuschungssicherheit ohne wesentlich höheren (Rechen-) Aufwand gesteigert werden. Der Temperatur-Schwellenwert beträgt vorzugsweise 35 bis 38 Grad Celsius und der Temperatur-Toleranzwert beträgt vorzugsweise 6 bis 10, z.B. 8 Grad Celsius.

In einer Weiterbildung sind die Realbildkamera und die Wärmebildkamera so ausgerichtet, dass das Infrarot-Emissionsbild denselben Bildbereich erfasst wie das Reflexionsbild. Dies stellt zwar im Allgemeinen höhere Anforderungen an den Aufbau der Vorrichtung, hat jedoch den Vorteil, dass keine aufwendigen Bildkorrekturen notwendig sind, um Positionen im Infrarot-Emissionsbild (Wärmebild) mit Positionen im Reflexionsbild (Realbild) zu korrelieren. Dies ist besonders von Vorteil, wenn das Erfassen des Infrarot-Emissionsbilds zeitgleich mit dem Erfassen des Reflexionsbilds erfolgt. Das zeitgleiche Erfassen der Bilder erlaubt ein zeitgleiches (paralleles) Auswerten von Infrarot-Emissionsbild und Reflexionsbild mittels der Infrarotbildauswertung und der Realbildauswertung. Die Realbildkamera und die Wärmebildkamera sind miteinander gekoppelt und zusammen vertikal verlagerbar. Ein Relativabstand zwischen der Realbildkamera und der Wärmebildkamera ist konstant. Vorzugsweise ist dieser Relativabstand ein Relativabstand zumindest in vertikaler Richtung. Dies hat den Vorteil, dass die beiden Kameras einfach an einem

Trägerelement oder einer Tür montiert, beispielsweise angeschraubt, sein können. Die optische Achse der Realbildkamera und die optische Achse der Wärmebildkamera verlaufen vorzugsweise vollständig parallel zueinander. Insbesondere wenn die Kameragehäuse aneinander grenzen und die Außenmaße der Kameragehäuse gegenüber dem Abstand zwischen jeder der Kameras und dem Gesicht klein sind, hat dies den Vorteil, dass die Realbildkamera und die Wärmebildkamera im Wesentlichen denselben Bildausschnitt erfassen. Alternativ kann der Relativabstand in vertikaler Richtung von der vertikalen Position der Realbildkamera und der Wärmebildkamera abhängig sein. Dies ist vorteilhaft, wenn die Kameras schwenkbar gelagert sind. Der Bildausschnitt der Realbildkamera kann dann präzise und flexibel an den Bildausschnitt der Wärmebildkamera angepasst werden, ohne dass sich die Kameragehäuse gegenseitig berühren.

Die optische Achse der Realbildkamera kann optional mittels eines Spiegels, beispielsweise mittels eines Aluminium- oder Silberspiegels, umgelenkt sein. Ferner kann die optische Achse der Wärmebildkamera mittels einer polierten Metallscheibe umgelenkt sein. Vorzugsweise sind die optischen Achsen jeweils um 90 Grad umgelenkt. Die Wärmebildkamera und die Realbildkamera können auf diese Weise flexibel angeordnet werden und Bauraum kann effizient genutzt werden.

Vorzugsweise sind die Realbildkamera und die Wärmebildkamera derart ausgerichtet, dass ihre optischen Achsen zumindest abschnittsweise kollinear zueinander verlaufen. Hierzu kann beispielsweise ein dichroitischer Spiegel verwendet werden. In diesem Fall sind die Realbildkamera und die Wärmebildkamera im Wesentlichen senkrecht zueinander angeordnet. Die optische Achse der Realbildkamera wird durch den dichroitischen Spiegel vorzugsweise um etwa 90 Grad umgelenkt. Auf einer der Wärmebildkamera abgewandten Seite des dichroitischen Spiegels verlaufen die beiden optischen Achsen somit kollinear zueinander. Das mit der Realbildkamera zu detektierende Licht im sichtbaren Spektralbereich wird bei dieser Anordnung durch den dichroitischen Spiegel abgelenkt und die mit der Wärmebildkamera zu detektierende Wärmestrahlung wird durch den dichroitischen Spiegel hindurch transmittiert. Der dichroitische Spiegel ist bei dieser Anordnung vorzugsweise eine polierte Germanium-Scheibe. Eine derartige Anordnung hat den Vorteil, dass das Wärmebild und das Realbild mit ihren Konturen direkt übereinander gelegt werden können. D.h., die Positionskoordinaten der im Gesicht ausgeprägten Merkmale sind in beiden Bildern im Wesentlichen identisch.

Alternativ kann die mit der Wärmebildkamera zu detektierende Wärmestrahlung durch den dichroitischen Spiegel abgelenkt werden und das mit der Realbildkamera zu detektierende Licht im sichtbaren Spektralbereich durch den dichroitischen Spiegel hindurch transmittiert werden.

Die Realbildkamera und die Wärmebildkamera sind in einer Ausführungsform separat ausgebildet. In diesem Fall sind die Realbildkamera und/oder die Wärmebildkamera vorzugsweise jeweils mittels eines Motorantriebs vertikal verlagerbar und/oder um eine senkrecht zu einer optischen Achse der Wärmebildkamera und/oder der Realbildkamera verlaufende Rotationsachse schwenkbar gelagert. Aufwendige Optiken können somit vermieden werden. Vielmehr können die Kameras einfach ausgeführt sein. Die Wärmebildkamera kann beispielsweise so ausgerichtet sein, dass ihre optische Achse abschnittsweise, insbesondere im Bereich eines Objektivs der Wärmebildkamera, im Wesentlichen senkrecht zu der optischen Achse der Realbildkamera verläuft. Die optische Achse der Wärmebildkamera kann dann beispielsweise über einen Spiegel umgelenkt sein.

Die Vorrichtung umfasst ferner eine Stereokamera. Die Stereokamera ist senkrecht zu der Realbildkamera ausgerichtet. Sie ist dazu eingerichtet, eine Position und eine Größe der Person und eines Kopfes der Person zu ermitteln und für die Position und die Größe des Kopfes charakteristische Daten an eine mit den Motorantrieben der Realbildkamera und der Wärmebildkamera verbundene Kamerasteuerung zu übertragen. Die Kamerasteuerung ist dann dazu eingerichtet, die Motorantriebe so anzusteuern, dass der Bildbereich der Realbild- und der Wärmebildkamera den Kopf der Person umfasst. Weiterhin kann vorgesehen sein, dass die Stereokamera als Infrarotkamera ausgestaltet ist. In diesem Fall existiert vorzugsweise kein Überlapp zwischen einem detektierbaren Spektralbereich der Stereokamera und einem detektierbaren Spektralbereich der Wärmebildkamera. Beispielsweise kann die Stereokamera auch eine Lichtquelle, zum Beispiel eine Laserlichtquelle, umfassen, die dazu eingerichtet ist, ein Muster auf den Kopf der Person zu projizieren. Der detektierbare Spektralbereich der Stereokamera kann beispielsweise im Nahinfraroten liegen.

In einem hier beschriebenen Verfahren zum Identifizieren einer Person werden ein Reflexionsbild eines Gesichts der Person im sichtbaren Spektralbereich mittels einer Realbildkamera und ein Infrarot-Emissionsbild des Gesichts der Person mittels einer Wärmebildkamera erfasst. Das Reflexionsbild wird in Form von Reflexionsbilddaten an eine Realbildauswertung übermittelt und das Infrarot-Emissionsbild wird in Form von Infrarotbilddaten an eine Infrarotbildauswertung übermittelt. Vorzugsweise erfolgt das Übermitteln der Reflexionsbilddaten und der Infrarotbilddaten gleichzeitig. Ferner werden erste biometrische Merkmale des Gesichts aus den Reflexionsbilddaten ermittelt, ein Referenzbild mit einer Personen-Identifikation empfangen, zweite biometrische Merkmale aus diesem Referenzbild ermittelt und die Personen-Identifikation bereitgestellt, wenn die ersten und zweiten biometrischen Merkmale in einem vorbestimmten Maß übereinstimmen. Diese Schritte werden insbesondere von der Realbildauswertung durchgeführt. Vorzugsweise zeitgleich dazu wird außerdem eine Temperaturverteilung aus den Infrarotbilddaten ermittelt und es wird bestimmt, ob die Temperaturverteilung zumindest teilweise einer Temperaturverteilung im Gesicht einer lebendigen Person zumindest nahekommt. Wenn dies der Fall ist, wird eine Ausgabesteuerung angewiesen, die Personen-Identifikation auszugeben. Diese Schritte werden insbesondere von der Infrarotbildauswertung durchgeführt. Vorzugsweise kann das Erfassen des Reflexionsbilds und das Erfassen des Infrarot-Emissionsbilds zeitgteich ausgeführt werden, wodurch die beiden Kameras denselben Bildbereich erfassen. Ferner können zudem die Reflexionsbilddaten und die Infrarotbilddaten zur Auswertung zeitgleich weiterverarbeitet werden. Das heißt, dass die Reflexionsbilddaten und die Infrarotbilddaten in diesem Fall nicht einzeln nacheinander verarbeitet werden. Damit können das Reflexionsbild und das Infrarot-Emissionsbild zum Auswerten zeit- und positionsgleich überlagert werden, um Wärmeinformationen mit biometrischen Informationen des Gesichts in Beziehung setzen zu können. Insbesondere können Positionsdaten von Merkmalen des Reflexionsbilds zur Überlagerung an die Infrarotbildauswertung übermittelt werden. Dadurch kann erkannt werden, ob das Reflexionsbild und das Infrarot-Emissionsbild von einer lebendigen Person stammen, was Täuschungen der Auswertung der Reflexionsbilddaten durch u.a. Teilabdeckungen des Gesichts verhindern kann.

Optional kann der Schritt des Übermittelns des Infrarot-Emissionsbilds in Form von Infrarotbilddaten an die Infrarotbildauswertung erst durchgeführt werden, wenn die Infrarotbildauswertung ermittelt hat, dass die Temperaturverteilung zumindest teilweise einer Temperaturverteilung im Gesicht einer lebendigen Person zumindest nahekommt. Dies hat den Vorteil, dass das im Allgemeinen aufwendige Ermitteln der ersten und zweiten biometrischen Merkmale sowie das Ermitteln, ob die ersten und zweiten biometrischen Merkmale in einem vorbestimmten Maß übereinstimmen, nicht umsonst erfolgt. Das Verfahren umfasst ferner den Schritt eines Bestimmens, ob ein Temperaturwert aus der Temperaturverteilung von einem vorbestimmten Temperatur-Schwellenwert nicht weiter abweicht, als ein vorbestimmter Temperatur-Toleranzwert. Zusätzlich dazu kann ein Temperatur-Gradientenfeld aus der Temperaturverteilung ermittelt werden. Dann kann auch bestimmt werden, ob ein Betragswert aus dem Temperatur-Gradientenfeld von einem vorbestimmten Temperaturgradient-Schwellenwert nicht weiter abweicht, als ein vorbestimmter Temperaturgradient-Toleranzwert.

Gemäß einer Weiterbildung des Verfahrens kann vorgesehen sein, dass jeweils eine Position zumindest eines im Gesicht ausgeprägten Merkmals aus den Reflexionsbilddaten bestimmt wird. Es kann sich dabei beispielsweise um eine Position handeln, an der der Temperaturwert von dem vorbestimmten Temperatur-Schwellenwert nicht weiter abweicht, als der vorbestimmte Temperatur-Toleranzwert, oder bei der der Betragswert aus dem Temperatur-Gradientenfeld von einem vorbestimmten Temperaturgradient-Schwellenwert nicht weiter abweicht, als ein vorbestimmter Temperaturgradient-Toleranzwert. Bei dem im Gesicht ausgeprägten Merkmal kann es sich um eines aus der folgenden Gruppe handeln: ein Auge, eine Nase, ein Mund, eine Wange oder eine Stirn der Person. Der Temperatur-Schwellenwert beträgt vorzugsweise 35 bis 38 Grad Celsius und der Temperatur-Toleranzwert beträgt vorzugsweise 6 bis 10, z.B. 8 Grad Celsius. Bei Durchführung des Verfahrens wird die Realbildkamera zusammen mit der Wärmebildkamera vertikal verlagert. Dabei bleibt ein Relativabstand zwischen der Realbildkamera und der Wärmebildkamera konstant. Die Realbildkamera und die Wärmebildkamera können ferner so ausgerichtet werden, dass ihre optischen Achsen zumindest abschnittsweise kollinear zueinander verlaufen. Das Verfahren umfasst ein Ausrichten der Realbildkamera und der Wärmebildkamera, sodass das Infrarot-Emissionsbild denselben Bildbereich erfasst wie das Reflexionsbild. Hierfür werden die Realbildkamera und die Wärmebildkamera jeweils mittels eines Motorantriebs in vertikaler Richtung verlagert, und die Realbildkamera und/oder die Wärmebildkamera kann um eine senkrecht zu einer optischen Achse der Wärmebildkamera und/oder der Realbildkamera verlaufende Rotationsachse geschwenkt werden.

Außerdem ist vorgesehen, dass eine Stereokamera senkrecht zu der Realbildkamera ausgerichtet wird. Dadurch kann eine Position und eine Größe der Person und/oder eines Kopfes der Person auf vorteilhafte Weise ermittelt werden. Für die Position und die Größe der Person und des Kopfes charakteristische Daten werden dann an eine mit den Motorantrieben der Realbildkamera und der Wärmebildkamera verbundene Kamerasteuerung übertragen, und die Motorantriebe werden so angesteuert, dass der Bildbereich der Realbild- und der Wärmebildkamera den Kopf der Person umfasst.

Ein hier beschriebenes System zum Identifizieren einer Person umfasst eine vorangehend ausführlich beschriebene Vorrichtung zum Identifizieren einer Person sowie zumindest eine Ausgangstür, an der eine Realbildkamera und/oder eine Wärmebildkamera angeordnet sind. Die Realbildkamera und die Wärmebildkamera können dabei die vorangehend in Zusammenhang mit der Vorrichtung beschriebenen Merkmale aufweisen. Das System kann ferner einen vertikal ausgerichteten bogenförmigen Abschnitt mit einem Mittelteil umfassen. Für den Fall, dass die Vorrichtung eine Stereokamera der vorangehend beschriebenen Art umfasst, ist diese vorzugsweise über ein horizontal ausgerichtetes Linearmotorsystem an dem Mittelteil angeordnet. Die Stereokamera kann insbesondere mit dem Mittelteil des bogenförmigen Abschnitts über das Linearmotorsystem verbunden sein. Das Linearmotorsystem kann dazu eingerichtet sein, die Stereokamera horizontal zu verlagern.

Ferner ist ein Computerprogrammprodukt mit Programmcodeteilen zum Ausführen des vorangehend beschriebenen Verfahrens vorgesehen. Dieses Computerprogrammprodukt kann auf einem Datenträger gespeichert sein.

### Kurzbeschreibung der Zeichnungen

Mögliche Ausführungsformen werden nun anhand der beigefügten schematischen Zeichnungen näher erläutert, von denen:
- Fig. 1: eine schematische Darstellung einer Vorrichtung zum Identifizieren einer Person zeigt;
- Fig. 2: eine Funktionsweise der Vorrichtung zum Identifizieren einer Person aus Fig. 1 zeigt, wobei kein Täuschungsversuch vorliegt;
- Fig. 3: eine Funktionsweise der Vorrichtung zum Identifizieren einer Person aus Fig. 1 zeigt, wobei ein Täuschungsversuch mittels eines vor die Kamera gehaltenen Bildes des Gesichts einer Person vorliegt;
- Fig. 4: eine Funktionsweise der Vorrichtung zum Identifizieren einer Person aus Fig. 1 zeigt, wobei ein Täuschungsversuch mittels einer Latexmaske vorliegt;
- Fig. 5: eine Funktionsweise der Vorrichtung zum Identifizieren einer Person aus Fig. 1 zeigt, wobei ein Täuschungsversuch mittels eines Smartphones vorliegt;
- Fig. 6: mit der Vorrichtung aus Fig. 1 erfasste Infrarot-Emissionsbilder von Gesichtern verschiedener Personen zeigt;
- Fig. 7: mit der Vorrichtung aus Fig. 1 erfasste Infrarot-Emissionsbilder von einer Person, die eine das Gesicht überdeckende Latexmaske trägt, zeigt;
- Fig. 8: schematische Seitenansichten vier verschiedener Anordnungen der Wärmebildkamera und der Realbildkamera gemäß einer ersten, zweiten, dritten und vierten Ausführungsform der Vorrichtung zum Identifizieren einer Person zeigt;
- Fig. 9: eine Programmoberfläche eines Computerprogrammprodukts zum Identifizieren einer Person zeigt;
- Fig. 10: eine perspektivische Gesamtansicht eines Systems zum Identifizieren einer Person zeigt;
- Fig. 11: eine perspektivische Detailansicht einer Ausgangstür des Systems zum Identifizieren einer Person aus Fig. 10 zeigt; und
- Fign. 12 und 13: zwei mit einer Stereokamera aus dem System aus Fig. 10 erfasste Bilder zeigen.

### Detaillierte Beschreibung der Zeichnungen

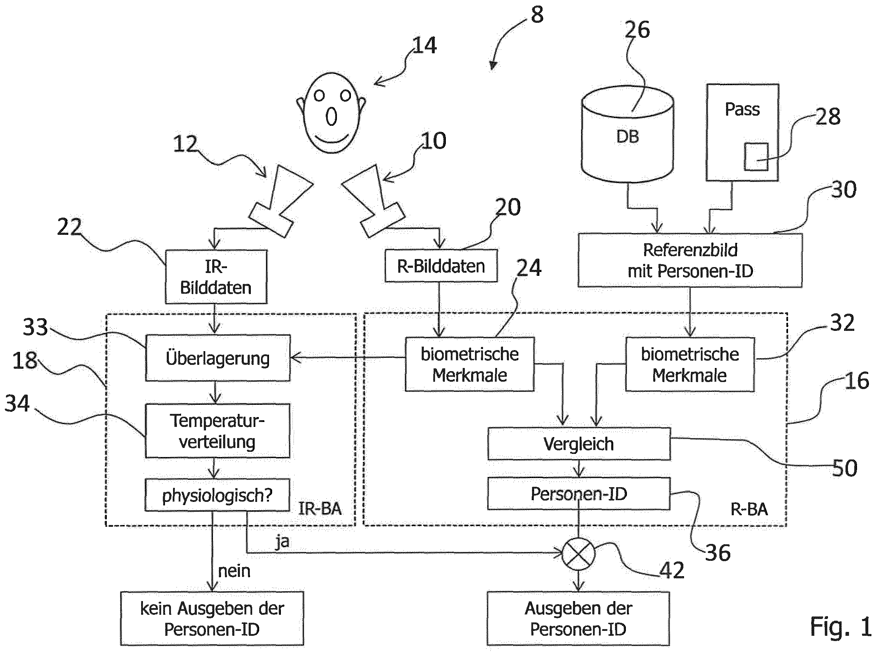

Fig. 1 zeigt eine Vorrichtung 8 zum Identifizieren einer Person eine Realbildkamera 10 (hier: digitale Farbbildkamera) zum Erfassen eines Reflexionsbilds 38 eines Gesichts 14 der Person im sichtbaren Spektralbereich sowie eine Wärmebildkamera 12 zum Erfassen eines Infrarot-Emissionsbilds 40 des Gesichts 14 der Person. Darüber hinaus weist die Vorrichtung eine Realbildauswertung 16 sowie eine Infrarotbildauswertung 18 auf. Die Realbildkamera 10 ist dazu eingerichtet, das Reflexionsbild 38 in Form von Reflexionsbilddaten 20 an die Realbildauswertung 16 zu übermitteln, und die Wärmebildkamera 12 ist dazu eingerichtet, das Infrarot-Emissionsbild 40 in Form von Infrarotbilddaten 22 an die Infrarotbildauswertung 18 zu übermitteln.

Die Realbildauswertung 16 ist ferner dazu eingerichtet, aus den Reflexionsbilddaten 20 erste biometrische Merkmale 24 des Gesichts 14 zu ermitteln und ein Referenzbild 30 mit einer Personen-Identifikation 36 zu empfangen. Das Referenzbild wird hier von einer Datenbank 26 oder von einem Lesegerät, das einen Chip 28 eines elektronischen Reisepasses ausliest, empfangen. Die Realbildauswertung 16 ist dazu eingerichtet, aus diesem Referenzbild 30 dann zweite biometrische Merkmale 32 zu ermitteln, und, wenn die ersten und zweiten biometrischen Merkmale 24, 36 in einem vorbestimmten Maß übereinstimmen, die Personen-Identifikation 36 einer Ausgabesteuerung 42 bereitzustellen. Dafür ist es vorgesehen, dass ein Vergleich 50 zwischen den ersten und zweiten biometrischen Merkmalen 24, 36 stattfindet. Insbesondere werden die genauen Positionen und Dimensionen der einzelnen biometrischen Merkmale 24, 36 miteinander verglichen. Eine Übereinstimmung liegt vor, falls eine Abweichung zwischen den Positionen und Dimensionen geringer ist als ein vorbestimmter Abgleich-Toleranzwert.

Des Weiteren übermittelt die Realbildauswertung 16 die biometrischen Merkmale 24 bzw. Positionsdaten von Merkmalen der Reflexionsbilddaten 20 zur parallelen Weiterverarbeitung an die Infrarotbildauswertung 18, wo diese mit den Infrarotbilddaten 22 überlagert werden. Bei der zeit- und positionsgleichen Überlagerung 33 werden Informationen der Reflexionsbilddaten 20 mit Informationen der Infrarotbilddaten 22 in Beziehung gesetzt, um effektiv Täuschungen der Realbildauswertung 16 durch beispielsweise Teilabdeckungen des Gesichts zu verhindern.

Die Infrarotbildauswertung 18 ist auch dazu eingerichtet, eine Temperaturverteilung 34 aus den Infrarotbilddaten 22 bzw. aus den überlagerten Bilddaten zu ermitteln und zu bestimmen, ob die Temperaturverteilung 34 zumindest teilweise einer Temperaturverteilung im Gesicht einer lebendigen Person (physiologische Temperaturverteilung) zumindest nahekommt, und wenn dies der Fall ist, die Ausgabesteuerung 42 anzuweisen, die Personen-Identifikation 36 auszugeben.

Darüber hinaus ist die Infrarotbildauswertung 18 dazu eingerichtet, zu bestimmen, ob ein Temperaturwert 60 aus der Temperaturverteilung 34 von einem vorbestimmten Temperatur-Schwellenwert nicht weiter abweicht, als ein vorbestimmter Temperatur-Toleranzwert. Sie ist auch dazu eingerichtet, aus der Temperaturverteilung 34 ein Temperatur-Gradientenfeld (nicht gezeigt) zu ermitteln und zu bestimmen, ob ein Betragswert aus dem Temperatur-Gradientenfeld von einem vorbestimmten Temperaturgradient-Schwellenwert nicht weiter abweicht, als ein vorbestimmter Temperaturgradient-Toleranzwert.

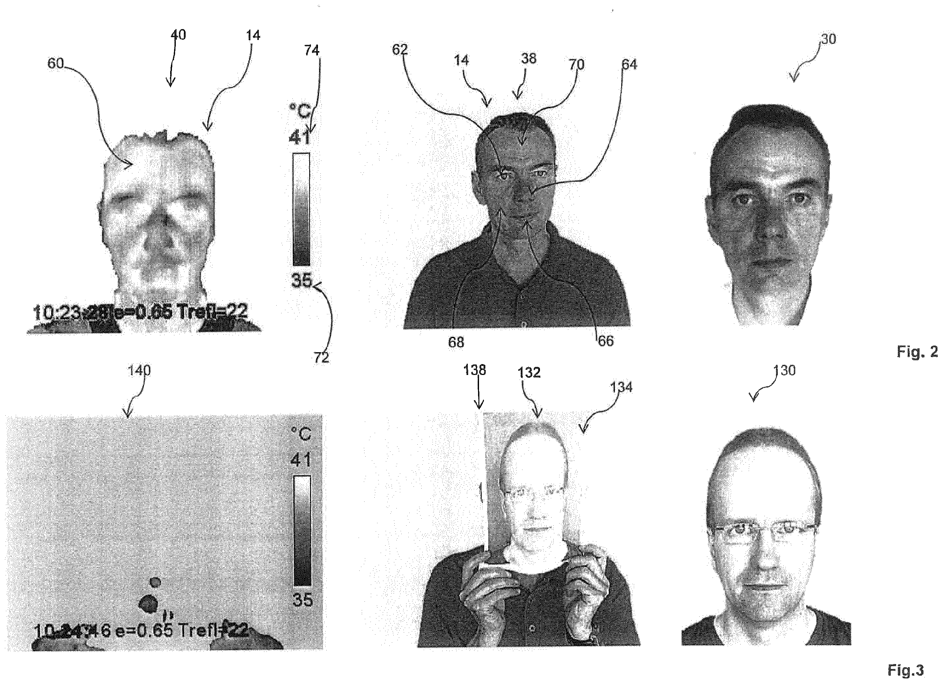

Wie in Fig. 2 gezeigt, sind die Realbildkamera 10 und die Wärmebildkamera 12 derart ausgerichtet, dass sie denselben Bildbereich erfassen. D.h., das Infrarot-Emissionsbild 40 zeigt im Wesentlichen denselben Körperbereich der Person wie das Reflexionsbild 38. Aus diesem Grund weisen die im Gesicht 14 der Person ausgeprägten Merkmale in den beiden Bildern 38, 40 im Wesentlichen dieselben Bildkoordinaten auf. Aufwendige Korrekturen können somit vermieden werden. In dem Reflexionsbild (Realbild) sind diverse im Gesicht ausgeprägte Merkmale der Person gezeigt. Insbesondere sind ein Auge 62, eine Nase 64, ein Mund 66, eine Wange 68 und eine Stirn der Person dargestellt.

Die Realbildauswertung 16 ist dazu eingerichtet, aus den Reflexionsbilddaten 20 jeweils eine Position zumindest eines dieser im Gesicht 14 ausgeprägten Merkmale zu bestimmen und diese Position/en der Infrarotbildauswertung 18 zu übermitteln. Als Temperaturverteilung im Gesicht einer lebendigen Person nahekommend wird die Temperaturverteilung 34 hier insbesondere eingestuft, wenn ein Temperaturwert an zumindest einer dieser Positionen von dem vorbestimmten Temperatur-Schwellenwert nicht weiter abweicht, als der vorbestimmte Temperatur-Toleranzwert, oder der Betragswert aus dem Temperatur-Gradientenfeld von einem vorbestimmten Temperaturgradient-Schwellenwert nicht weiter abweicht, als ein vorbestimmter Temperaturgradient-Toleranzwert. Der Temperatur-Schwellenwert kann zum Beispiel 35 bis 38 Grad Celsius und der Temperatur-Toleranzwert 6 bis 10, z.B. 8 Grad Celsius betragen.

Darüber hinaus weist das Infrarot-Emissionsbild (Wärmebild) eine Temperaturskala mit einer Minimaltemperatur 72 sowie einer Maximaltemperatur 74 auf. Im Infrarot-Emissionsbild 40 beträgt die gezeigte Minimaltemperatur 35 Grad Celsius und die Maximaltemperatur 41 Grad Celsius. Jeder Bildpunkt, der einen Temperaturwert unterhalb der Minimaltemperatur 72 aufweist, erscheint schwarz.

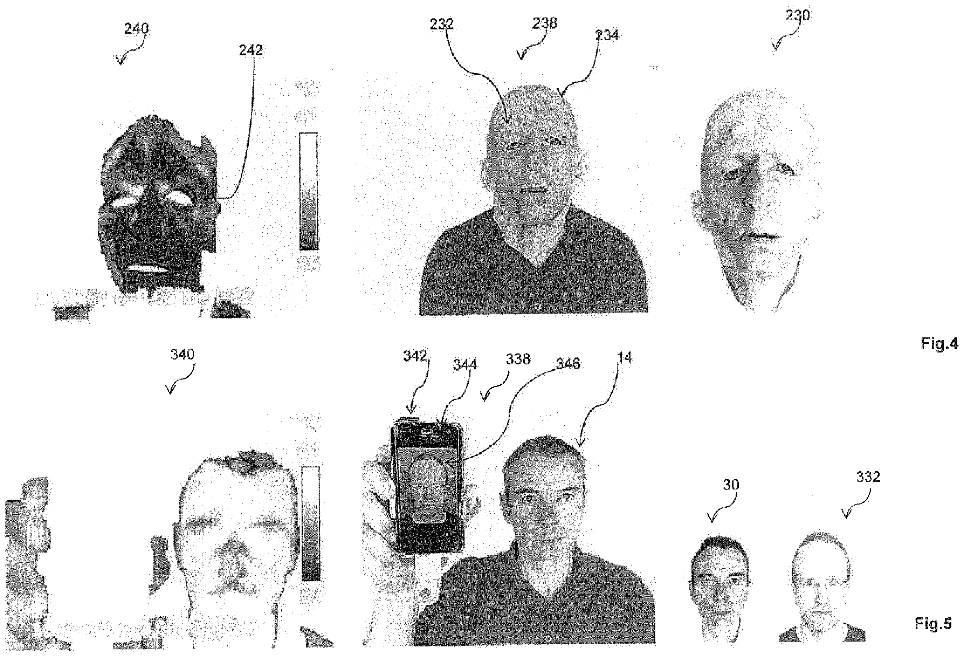

In den Fign. 3 bis 5 ist dargestellt, wie die Vorrichtung zum Identifizieren einer Person Täuschungsversuche effizient abwehren kann. Diese Täuschungsversuche können mittels eines vorgehaltenen Bildes eines vorzutäuschenden Gesichts 132 auf Papier 134 (Fig. 3), mittels einer übergestülpten Latexmaske 232, die ein vorzutäuschendes Gesicht 234 aufweist (Fig. 4), oder mittels eines auf einer Anzeige (Display) 344 eines Smartphones 342 gezeigten, vorzutäuschenden Gesichts 346 (Fig. 5) erfolgen.

In dem in Fig. 3 gezeigten Beispiel ist in einem Infrarot-Emissionsbild 140 kein Gesicht zu erkennen, obgleich in einem Reflexionsbild 138 das Gesicht 132 zu sehen ist. Vielmehr sind in dem Infrarot-Emissionsbild 140 lediglich Teile von Schulterpartien zu sehen. Dies liegt daran, dass eine Wärmeemission einer lebendigen Person nicht durch das Papier hindurchtritt (transmittiert wird), sondern von dem Papier hauptsächlich reflektiert wird. Die Temperaturverteilung kommt somit nicht einer Temperaturverteilung im Gesicht einer lebendigen Person nahe. Obgleich die Realbildauswertung 16 durch den Vergleich 50 eine zu einem Referenzbild 130 gehörige Personen-Identifikation zur Ausgabe bereitstellt, wird diese nicht ausgegeben.

Fig. 4 zeigt ein Infrarot-Emissionsbild 240 sowie ein Reflexionsbild 238 eines durch die Maske 232 vorgetäuschten Gesichts 234. Eine im Infrarot-Emissionsbild 240 gezeigte Temperaturverteilung ist wesentlich anisotroper als eine Temperaturverteilung in einem lebendigen Gesicht. Im vorliegenden Beispiel weist die Temperaturverteilung scharfe Kanten 242 an Übergängen von der Maske 232 zu dem durch die Maske 232 verdeckten Kopf auf. Der Temperaturgradient ist an diesen Kanten wesentlich höher als jeder Temperaturgradient-Betragswert in einem Gesicht einer lebendigen Person und er übertrifft den Temperaturgradient-Schwellenwert um mehr als den Temperaturgradient-Toleranzwert. Da die Infrarotbildauswertung 18 dazu eingerichtet ist, dies zu berücksichtigen, wird eine zu einem Referenzbild 230 gehörige Personen-Identifikation (einer vorgetäuschten Person) nicht ausgegeben, obgleich die Realbildauswertung 16 diese Personen-Identifikation durch den Vergleich 50 zur Ausgabe bereitstellt.

In dem in Fig. 5 illustrierten Täuschungsversuch hält die Person 14 aus Fig. 2 das Smartphone 342 mit einem auf der Anzeige 344 des Smartphones 342 dargestellten vorzutäuschenden Gesicht 346 vor die beiden Kameras 10, 12. Sowohl in einem Infrarot-Emissionsbild 340 als auch in einem Reflexionsbild 338 erscheint somit das Gesicht 14 und das Gesicht 346 der vorzutäuschenden Person. In diesem Fall ist die Realbildauswertung 16 dazu eingerichtet, aus den ihr übermittelten Reflexionsbilddaten zwei separate Bilddatensätze, einen mit dem Gesicht 14 und einen mit dem Gesicht 346 der vorzutäuschenden Person, auszuwerten und im Ergebnis zwei (verschiedene) Personen-Identifikationen bereitzustellen. Die Realbildauswertung 16 empfängt hierfür das Referenzbild 30 sowie ein weiteres Referenzbild 332. Da auf dem Infrarot-Emissionsbild 340 nur das Gesicht 14 sichtbar ist, kann die Infrarotbildauswertung 18 so konfiguriert sein, dass sie die Ausgabesteuerung 42 anweist, die dem Gesicht 14 entsprechende Personen-Identifikation 36 auszugeben, oder, da sie einen Täuschungsversuch festgestellt hat, überhaupt keine Personen-Identifikation auszugeben und die Person abzuweisen.

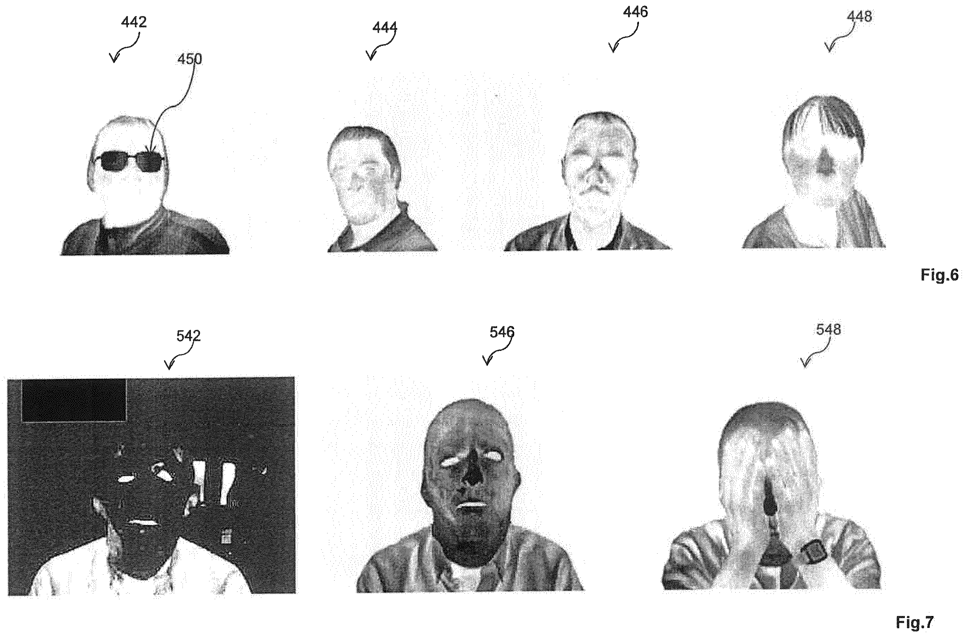

In Fig. 6 sind vier Infrarot-Emissionsbilder 442, 444, 446, 448 mit Gesichtern vierer verschiedener lebendiger Personen dargestellt. In dem Infrarot-Emissionsbild 442 ist ein Teil des Gesichts durch eine Sonnenbrille 450 verdeckt. Die Abweichung von dem Temperatur-Schwellenwert und von dem Temperaturgradient-Schwellenwert übertrifft die entsprechenden Toleranzwerte. Dies ist insbesondere der Fall, wenn die oben genannten, ausgeprägten Merkmale die Augen sind. Dementsprechend findet auch hier keine Ausgabe der Personen-Identifikation statt. Da die Temperatur(gradient)verteilungen in den Infrarot-Emissionsbildern 444, 446 und 448 die jeweiligen Toleranzwerte nicht übertreffen, werden diese Gesichter als physiologisch (Temperaturverteilung kommt einer Temperaturverteilung im Gesicht einer lebendigen Person nahe) eingestuft. Drei weitere Infrarot-Emissionsbilder 542, 546, 548 sind in Fig. 7 dargestellt. Hier wird die Temperaturverteilung als nicht einer Temperaturverteilung im Gesicht einer lebendigen Person nahekommend eingestuft, da sie oben beschriebene Charakteristika eines durch eine Latexmaske vorgetäuschten Gesichts aufweist.

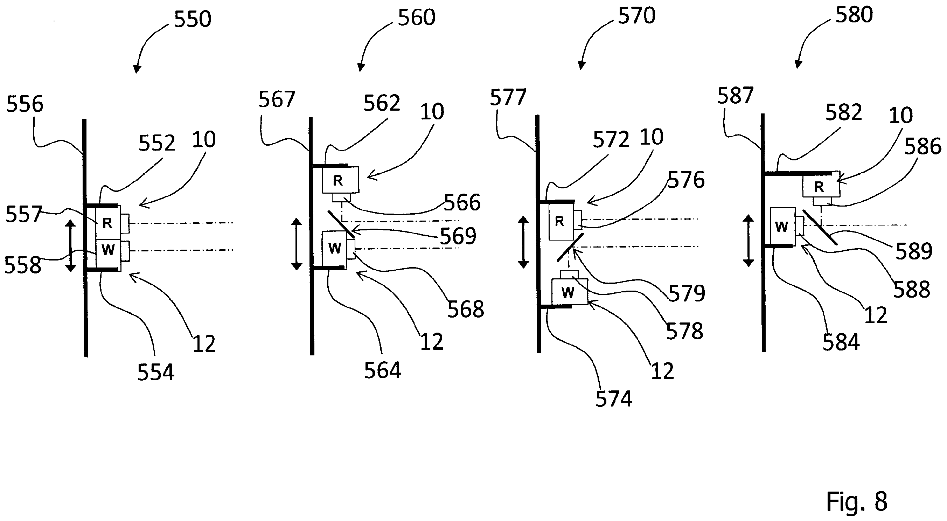

Fig. 8 zeigt vier Detailansichten von Anordnungen der Wärmebildkamera und der Realbildkamera gemäß einer ersten, einer zweiten, einer dritten und einer vierten Ausführungsform einer Vorrichtung zum Identifizieren einer Person. In der ersten Ausführungsform weist eine Vorrichtung 550 zum Identifizieren einer Person alle Merkmale der Vorrichtung 8 auf. Darüber hinaus sind die Realbildkamera 10 und die Wärmebildkamera 12 über Trägerelemente 552, 554 fest miteinander an einen Lineartisch 556 gekoppelt und zusammen vertikal mittels des Lineartisches 556 verlagerbar. Ein Gehäuse 557 der Realbildkamera 10 grenzt an ein Gehäuse 558 der Wärmebildkamera 12 und die beiden Kameras 10, 12 sind parallel zueinander ausgerichtet, d.h. ihre optischen Achsen verlaufen parallel zueinander.

Eine Vorrichtung 560 zum Identifizieren einer Person gemäß einer zweiten Ausführungsform weist ebenfalls alle Merkmale der Vorrichtung 8 auf. Darüber hinaus sind bei der Vorrichtung 560 die Realbildkamera 10 und die Wärmebildkamera 12 über Trägerelemente 562, 564 fest miteinander an einen Lineartisch 567 gekoppelt und zusammen vertikal mittels des Lineartisches 567 verlagerbar. Anders als bei der Vorrichtung 550 sind die beiden Kameras 10, 12 jedoch senkrecht zueinander ausgerichtet, sodass die optische Achse der Realbildkamera 10 im Bereich eines Objektivs 566 der Realbildkamera 10 senkrecht zu der optischen Achse der Wärmebildkamera 12 im Bereich eines Objektivs 568 der Wärmebildkamera 12 verläuft. Damit die Wärmebildkamera 12 und die Realbildkamera 10 im Wesentlichen denselben Bildbereich erfassen, ist die optische Achse der Realbildkamera 10 mittels eines Spiegels 569 um etwa 90 Grad umgelenkt und sie verläuft abschnittsweise parallel zu der optischen Achse der Wärmebildkamera 12. Insbesondere verlaufen die beiden optischen Achsen in der Nähe des zu erfassenden Gesichts 14 im Wesentlichen parallel zueinander.

Auch eine Vorrichtung zum Identifizieren einer Person 570 gemäß einer dritten Ausführungsform weist alle Merkmale der Vorrichtung 8 auf. Darüber hinaus sind bei der Vorrichtung 570 die Realbildkamera 10 und die Wärmebildkamera 12 über Trägerelemente 572, 574 fest miteinander an einen Lineartisch 577 gekoppelt und zusammen vertikal mittels des Lineartisches 577 verlagerbar. Wie bei der Vorrichtung 560 sind die beiden Kameras 10, 12 auch hier senkrecht zueinander ausgerichtet, sodass die optische Achse der Realbildkamera 10 im Bereich eines Objektivs 576 der Realbildkamera senkrecht zu der optischen Achse der Wärmebildkamera 12 im Bereich eines Objektivs 578 der Wärmebildkamera 12 verläuft. Damit die Wärmebildkamera 12 und die Realbildkamera 10 im Wesentlichen denselben Bildbereich erfassen, ist hier jedoch die optische Achse der Wärmebildkamera 12 mittels eines Spiegels 579 um etwa 90 Grad umgelenkt und verläuft abschnittsweise parallel zu der optischen Achse der Realbildkamera 10. Der Spiegel 579 ist eine polierte Metallscheibe. Auch hier verlaufen die beiden optischen Achsen in der Nähe des zu erfassenden Gesichts 14 im Wesentlichen parallel zueinander.

Eine Vorrichtung zum Identifizieren einer Person 580 gemäß einer vierten Ausführungsform weist ebenfalls alle Merkmale der Vorrichtung 8 auf. Darüber hinaus sind die Realbildkamera 10 und die Wärmebildkamera 12 über Trägerelemente 582, 584 fest miteinander gekoppelt und zusammen vertikal mittels eines Lineartisches 587 verlagerbar. Die beiden Kameras 10, 12 sind senkrecht zueinander ausgerichtet, sodass die optische Achse der Realbildkamera 10 im Bereich eines Objektivs 586 der Realbildkamera 10 senkrecht zu der optischen Achse der Wärmebildkamera 12 im Bereich eines Objektivs 588 der Wärmebildkamera 12 verläuft. Die optische Achse der Realbildkamera 10 ist um etwa 90 Grad mittels eines dichroitischen Spiegels 589, hier in Form einer polierten Germanium-Scheibe, umgelenkt. Die polierte Germanium-Scheibe transmittiert Wärmestrahlung (Strahlung im fernen infraroten Spektralbereich). Jenseits des dichroitischen Spiegels 589, d.h. auf einer der Wärmebildkamera 12 abgewandten Seite des dichroitischen Spiegels, 589 verläuft die optische Achse der Realbildkamera 10 kollinear zu der optischen Achse der Wärmebildkamera 12.

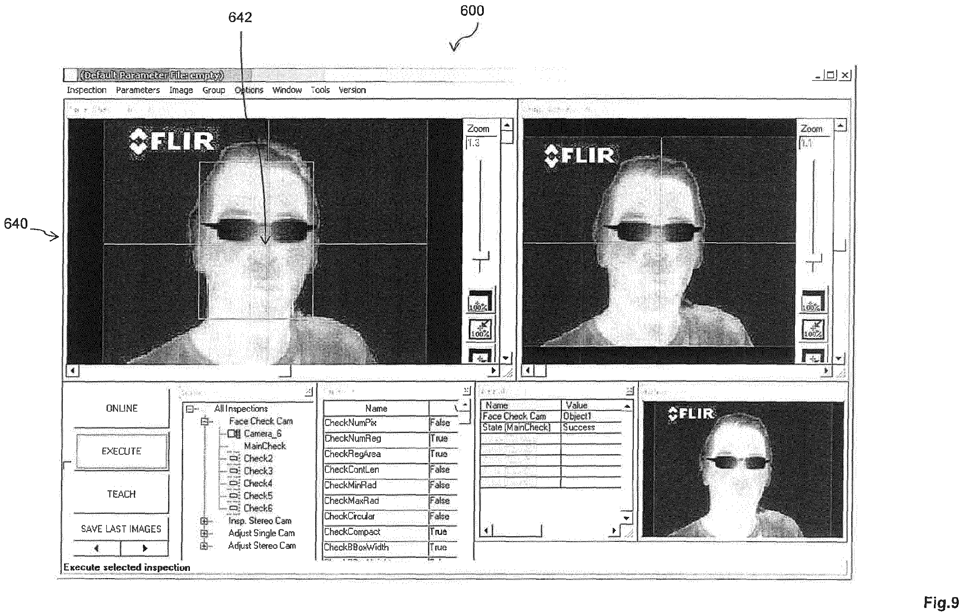

Eine graphische Benutzeroberfläche 600 eines Computerprogrammprodukts zum Identifizieren einer Person ist in Fig. 9 dargestellt. Darin ist ein Infrarot-Emissionsbild 640 mehrfach dargestellt. Ein Benutzer hat die Möglichkeit, mittels eines Fadenkreuzes 642 einen Bereich, für den die Temperaturverteilung 34 zu ermitteln ist, auszuwählen. Alternativ kann ein solcher Bereich auch automatisch mittels gängiger Gesichtserkennungsalgorithmen ausgewählt werden.

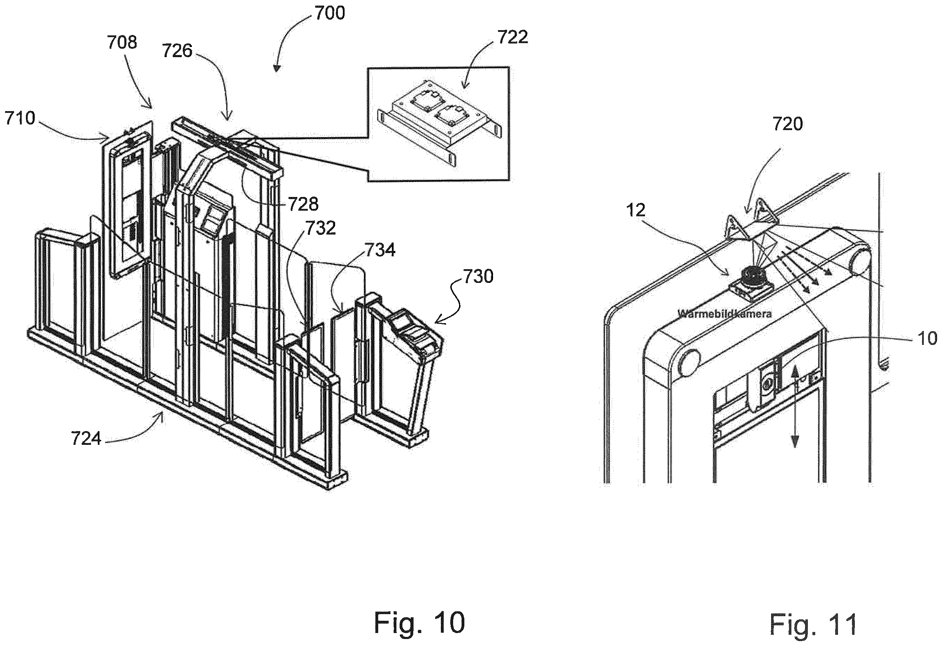

Ein System 700 zum Identifizieren einer Person ist in den Fign. 10 und 11 gezeigt. Es umfasst eine Vorrichtung 708 zum Identifizieren einer Person, die alle Merkmale der vorangehend ausführlich beschriebenen Vorrichtung 8 aufweist. Darüber hinaus weist die Vorrichtung 708 eine Stereokamera 722 auf, die im Wesentlichen senkrecht zu der Realbildkamera ausgerichtet ist. Die Stereokamera 722 ist dazu eingerichtet, eine Position und eine Größe der Person und/oder eines Kopfes der Person zu ermitteln und für die Position und die Größe der Person und/oder des Kopfes charakteristische Daten an eine mit Motorantrieben der Realbildkamera 10 und der Wärmebildkamera 12 verbundene Kamerasteuerung (nicht gezeigt) zu übertragen. Die Kamerasteuerung ist dazu eingerichtet, die Motorantriebe so anzusteuern, dass der Bildbereich der Realbild- und der Wärmebildkamera 10, 12 den Kopf, insbesondere das Gesicht 14, der Person umfasst.

Das System 700 umfasst ferner eine Ausgangstür 710. An der Ausgangstür 710 sind die Realbildkamera 10 und die Wärmebildkamera 12 angeordnet. Die Realbildkamera 10 und die Wärmebildkamera 12 sind separat ausgebildet. Während die Realbildkamera 10 mittels ihres Motorantriebs vertikal verlagerbar ist, ist die Wärmebildkamera 12 so ausgerichtet, dass ihre optische Achse im Bereich ihres Objektivs im Wesentlichen senkrecht zu einer optischen Achse der Realbildkamera verläuft und ihre optische Achse über einen Spiegel 720 umgelenkt ist. Die Stereokamera 722 ist als Infrarotkamera ausgestaltet. Im Fall des in den Fign. 10 und 11 gezeigten Systems 700 sind die von der Wärmebildkamera und der Stereokamera detektierten Spektralbereiche im Wesentlichen disjunkt, d.h. es existiert kein Überlapp zwischen den jeweils detektierten Spektralbereichen.

Das System 700 weist einen vertikal ausgerichteten bogenförmigen Abschnitt 724 mit einem Mittelteil 726 auf, an dem ein horizontal ausgerichtetes Linearmotorsystem 728 angeordnet ist. Die Stereokamera 722 ist mit dem Mittelteil des bogenförmigen Abschnitts über das Linearmotorsystem 728 verbunden und das Linearmotorsystem ist dazu eingerichtet, die Stereokamera horizontal zu verlagern.

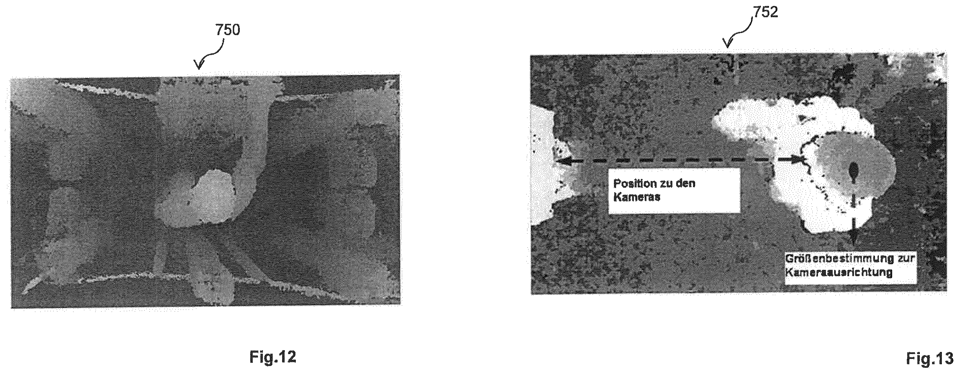

Zum Identifizieren positioniert die Person das elektronische Dokument, beispielsweise den Reisepass mit dem Chip 28, auf einem Lesegerät 730 und betritt das System 700 durch einen Eingang mit zwei Türen 732, 734. Durch ein Analysieren von Stereokamerabildern 750, 752 (vgl. Fign. 12 und 13) wird die Position und Größe der Person und des Kopfes der Person ermittelt. Unter Berücksichtigung dieser Daten werden die Realbildkamera 10 und die Wärmebildkamera 12 dann ausgerichtet, um das Gesicht der Person zu erfassen. Anschließend wird ermittelt, ob ein Täuschungsversuch vorliegt. Wenn kein Täuschungsversuch vorliegt, erfolgt eine Ausgabe der Personen-Identifikation und die Ausgangstür öffnet sich, wodurch der Person Zugang zu einem Sicherheitsbereich gewährt wird.

## Patentansprüche

1. Vorrichtung (8, 550, 560, 570, 580, 708) zum Identifizieren einer Person, umfassend:
- eine Realbildkamera (10) zum Erfassen eines Reflexionsbilds (38) eines Gesichts (14) der Person im sichtbaren Spektralbereich,
- eine Wärmebildkamera (12) zum Erfassen eines Infrarot-Emissionsbilds (40) des Gesichts (14) der Person,
- eine Realbildauswertung (16), und
- eine Infrarotbildauswertung (18),
wobei die Realbildkamera (10) dazu eingerichtet ist, das Reflexionsbild in Form von Reflexionsbilddaten (20) an die Realbildauswertung (16) zu übermitteln, und
die Wärmebildkamera (12) dazu eingerichtet ist, das Infrarot-Emissionsbild (40) in Form von Infrarotbilddaten (22) an die Infrarotbildauswertung (18) zu übermitteln,
wobei die Realbildauswertung (16) dazu eingerichtet ist,
aus den Reflexionsbilddaten (20) erste biometrische Merkmale (24) des Gesichts (14) zu ermitteln,
ein Referenzbild (30) mit einer Personen-Identifikation (36) zu empfangen,
aus diesem Referenzbild (30) zweite biometrische Merkmale (32) zu ermitteln,
und,
wenn die ersten und zweiten biometrischen Merkmale in einem vorbestimmten Maß übereinstimmen, die Personen-Identifikation einer Ausgabesteuerung (42) bereitzustellen, und wobei die Infrarotbildauswertung (18) dazu eingerichtet ist, eine Temperaturverteilung (34) aus den Infrarotbilddaten (22) zu ermitteln und zu bestimmen, ob die Temperaturverteilung (34) zumindest teilweise einer Temperaturverteilung im Gesicht einer lebendigen Person zumindest nahekommt, indem die Infrarotbildauswertung (18) bestimmt, ob ein Temperaturwert (60) aus der Temperaturverteilung (34) von einem vorbestimmten Temperatur-Schwellenwert nicht weiter abweicht, als ein vorbestimmter Temperatur-Toleranzwert, und wenn dies der Fall ist, die Ausgabesteuerung (42) anzuweisen, die Personen-Identifikation (36) auszugeben, wobei die Realbildkamera (10) und die Wärmebildkamera (12) miteinander gekoppelt sind und ein Relativabstand zwischen der Realbildkamera (10) und der Wärmebildkamera (12) konstant ist,
die Realbildkamera (10) und die Wärmebildkamera dazu eingerichtet sind, zeitgteich denselben Bildbereich zu erfassen und/oder die Reflexionsbilddaten (20) und die Infrarotbilddaten (22) in der Realbildauswertung (16) bzw. der Infrarotbildauswertung (18) zeitgteich ausgewertet werden, und wobei
die Reflexionsbilddaten (20) und die Infrarotbilddaten (22) zumindest teilweise überlagert werden, um zu erkennen, ob die Bilddaten von einem lebendigen Gesicht stammen,
**dadurch gekennzeichnet, dass** die Vorrichtung ferner eine Stereokamera umfasst, die senkrecht zu der Realbildkamera (10) ausgerichtet ist und die dazu eingerichtet ist, eine Position und eine Größe der Person und eines Kopfes der Person zu ermitteln und für die Position und die Größe des Kopfes charakteristische Daten an eine mit den Motorantrieben der Realbildkamera (10) und der Wärmebildkamera (12) verbundene Kamerasteuerung zu übertragen, und wobei die Kamerasteuerung dazu eingerichtet ist, Motorantriebe der Realbildkamera (10) und der Wärmebildkamera (12) so anzusteuern, dass der Bildbereich der Realbild- (10) und der Wärmebildkamera (12) den Kopf der Person umfasst, wobei die Realbildkamera (10) und die Wärmebildkamera (12) zusammen vertikal verlagerbar sind.

2. Vorrichtung (580) Anspruch 1,
**dadurch gekennzeichnet, dass** die Realbildkamera (10) und die Wärmebildkamera (12) derart ausgerichtet sind, dass ihre optischen Achsen zumindest abschnittsweise kollinear zueinander verlaufen.

3. Vorrichtung (708) nach einem der Ansprüche 1 oder 2,
**dadurch gekennzeichnet, dass** die Realbildkamera (10) und die Wärmebildkamera (12) separat ausgebildet sind, wobei die Realbildkamera (10) und/oder die Wärmebildkamera (12) jeweils mittels eines Motorantriebs vertikal verlagerbar und/oder um eine senkrecht zu einer optischen Achse der Wärmebildkamera (12) und/oder der Realbildkamera (10) verlaufende Rotationsachse schwenkbar gelagert ist.

4. Vorrichtung (570, 708) nach einem der Ansprüche 1 bis 3,
**dadurch gekennzeichnet, dass** die Wärmebildkamera (12) so ausgerichtet ist, dass ihre optische Achse abschnittsweise senkrecht zu der optischen Achse der Realbildkamera (10) verläuft, um das Wärmebild und das Realbild mit ihren Konturen direkt übereinander zu legen, und die optische Achse der Wärmebildkamera (12) über einen Spiegel (579, 720) umgelenkt ist.

5. Vorrichtung (708) nach Anspruch 1,
**dadurch gekennzeichnet, dass** die Stereokamera als Infrarotkamera ausgestaltet ist und kein Überlapp zwischen einem detektierbaren Spektralbereich der Stereokamera und einem detektierbaren Spektralbereich der Wärmebildkamera (12) existiert.

6. Verfahren zum Identifizieren einer Person mit den Schritten:
Erfassen eines Reflexionsbilds (38) eines Gesichts (14) der Person im sichtbaren Spektralbereich mittels einer Realbildkamera (10),
Erfassen eines Infrarot-Emissionsbilds (40) des Gesichts (14) der Person mittels einer Wärmebildkamera (12), wobei die Realbildkamera (10) und die Wärmebildkamera (12) miteinander gekoppelt und zusammen bei konstantem Relativabstand vertikal verlagert werden,
zeitgleiches Erfassen desselben Bildbereiches durch die Realbildkamera (10) und die Wärmebildkamera (12),
Übermitteln des Reflexionsbilds in Form von Reflexionsbilddaten (20) an eine Realbildauswertung (16), und
Übermitteln des Infrarot-Emissionsbilds (40) in Form von Infrarotbilddaten (22) an eine Infrarotbildauswertung (18),
zumindest teilweises Überlagern der Reflexionsbilddaten (20) und der Infrarotbilddaten (22), um zu erkennen, ob die Bilddaten von einem lebendigen Gesicht stammen,
Senkrechtes Ausrichten einer Stereokamera zu der Realbildkamera (10),
Ermitteln, mit der Stereokamera, einer Position und einer Größe der Person und eines Kopfes der Person,
Übertragen, an eine mit den Motorantrieben der Realbildkamera (10) und der Wärmebildkamera (12) verbundene Kamerasteuerung, für die Position und die Größe des Kopfes charakteristischer Daten, und
Ansteuern von Motorantrieben der Kamerasteuerung so, dass der Bildbereich der Realbild- und der Wärmebildkamera (12) den Kopf der Person umfasst, Ermitteln erster biometrischer Merkmale (24) des Gesichts (14) aus den Reflexionsbilddaten (20),
Empfangen eines Referenzbilds (30) mit einer Personen-Identifikation (36),
Ermitteln zweiter biometrischer Merkmale (32) aus diesem Referenzbild (30),
Bereitstellen der Personen-Identifikation, wenn die ersten und zweiten biometrischen Merkmale in einem vorbestimmten Maß übereinstimmen,
Ermitteln einer Temperaturverteilung (34) aus den Infrarotbilddaten (22),
Bestimmen, ob die Temperaturverteilung (34) zumindest teilweise einer Temperaturverteilung im Gesicht einer lebendigen Person zumindest nahekommt, indem bestimmt wird, ob ein Temperaturwert (60) aus der Temperaturverteilung (34) von einem vorbestimmten Temperatur-Schwellenwert nicht weiter abweicht, als ein vorbestimmter Temperatur-Toleranzwert, und wenn dies der Fall ist,
Anweisen, die Personen-Identifikation (36) auszugeben.

7. Verfahren nach Anspruch 6, umfassend die Schritte:
Bestimmen jeweils einer Position zumindest eines im Gesicht (14) ausgeprägten Merkmals aus den Reflexionsbilddaten, und
Übermitteln dieser Position/en an die Infrarotbildauswertung (18),
wobei der Temperaturwert an zumindest einer dieser Positionen von dem vorbestimmten Temperatur-Schwellenwert nicht weiter abweicht, als der vorbestimmte Temperatur-Toleranzwert.

8. Verfahren nach Anspruch 7,
**dadurch gekennzeichnet, dass** das im Gesicht (14) ausgeprägte Merkmal eines aus der folgenden Gruppe ist: ein Auge (62), eine Nase (64), ein Mund (66), eine Wange (68) oder eine Stirn (70) der Person.

9. Verfahren nach einem der Ansprüche 6 bis 8 sofern rückbezogen auf Anspruch 6, **dadurch gekennzeichnet, dass** der Temperatur-Schwellenwert 35 bis 38 Grad Celsius und der Temperatur-Toleranzwert 6 bis 10 Grad Celsius beträgt.

10. Verfahren nach einem der vorhergehenden Ansprüche 6 bis 9, umfassend den Schritt:
Ausrichten der Realbildkamera (10) und der Wärmebildkamera (12), wobei ihre optischen Achsen zumindest abschnittsweise kollinear zueinander verlaufen.

11. Verfahren nach einem der vorhergehenden Ansprüche 6 bis 10, umfassend den Schritt / die Schritte:
Verlagern der Realbildkamera (10) und der Wärmebildkamera (12) jeweils mittels eines Motorantriebs in vertikaler Richtung, und/oder
Schwenken der Realbildkamera (10) und/oder der Wärmebildkamera (12) um eine senkrecht zu einer optischen Achse der Wärmebildkamera (12) und/oder der Realbildkamera (10) verlaufende Rotationsachse.

12. System zum Identifizieren einer Person, umfassend
eine Vorrichtung zum Identifizieren einer Person nach einem der Ansprüche 1 bis 6,
und
zumindest eine Ausgangstür (710), an der eine Realbildkamera (10) gemäß Anspruch 1 und/oder eine Wärmebildkamera (12) gemäß Anspruch 1 angeordnet sind.

13. System nach Anspruch 12, wobei die Vorrichtung zum Identifizieren einer Person eine Vorrichtung nach einem der Ansprüche 10 oder 11 ist, umfassend
einen vertikal ausgerichteten bogenförmigen Abschnitt (724) mit einem Mittelteil (726),
wobei ein horizontal ausgerichtetes Linearmotorsystem (728) an dem Mittelteil (726) angeordnet ist, und
wobei eine Stereokamera (722) mit dem Mittelteil des bogenförmigen Abschnitts über das Linearmotorsystem verbunden ist,
wobei das Linearmotorsystem (728) dazu eingerichtet ist, die Stereokamera (722) horizontal zu verlagern.

14. Datenträger, auf dem ein Computerprogrammprodukt mit Programmcodeteilen zum Ausführen der Schritte nach einem der Ansprüche 6 bis 11 gespeichert ist.

## Claims

1. An apparatus (8, 550, 56, 570, 580, 708) for identifying a person, comprising:
- a real image camera (10) for capturing a reflectance image (38) of the person's face (14) in the visible spectrum,
- a thermal camera (12) for capturing an infrared emission image (40) of the person's face (14),
- a real image evaluation section (16), and
- an infrared image evaluation section (18),
wherein the real image camera (10) is adapted to transmit the reflectance image in the form of reflectance image data (20) to the real image evaluation section (16), and
the thermal camera (12) is adapted to transmit the infrared emission image (40) in the form of infrared image data (22) to the infrared image evaluation section (18),
wherein the real image evaluation section (16) is adapted to determine first biometric features (24) of the face (14) from the reflectance image data (20),
receive a reference image (30) with a personal identification (36),
determine second biometric features (32) from said reference image (30), and
if the first and the second biometric features coincide to a predetermined degree, provide an output controller (42) with the personal identification,
and wherein the infrared image evaluation section (18) is adapted to determine a temperature distribution (34) from the infrared image data (22) and to determine whether the temperature distribution (34) is at least partially approximating a temperature distribution in the face of a living person, in that the real image evaluation section (16) determines whether a temperature value (60) among the temperature distribution (34) does not deviate by more than a predetermined temperature tolerance value from a predetermined temperature threshold value, and in this case to instruct the output controller (42) to output the personal identification (36), with the real image camera (10) and the thermal camera (12) being coupled to each other and a relative distance between the real image camera (10) and the thermal camera (12) being constant,
the real image camera (10) and the thermal camera (12) being adapted to capture the same image area simultaneously, and/or wherein the reflectance image data (20) and the infrared image data (22) are simultaneously evaluated in the real image evaluation section (16) or in infrared real image evaluation section (18), respectively, and wherein
the reflectance image data (20) and the infrared image data (22) are at least partially superimposed in order to detect whether the image data originate from a living face,
**characterised in that** the apparatus further comprises a stereo camera which is oriented vertically to the real image camera (10) and adapted to determine a position and a size of a person and of the person's head and to transmit characteristic data of the position and the size of the head to a camera controller which is connected with the motor drives of the real image camera (10) and the thermal camera (12), and wherein the camera controller is adapted to control the motor drives of the real image camera (10) and the thermal camera (12) in such a manner that the image areas of the real image camera (10) and the thermal camera (12) covers the person's head, wherein the real image camera (10) and the thermal camera (12) are vertically movable together.

2. The apparatus (580) according to Claim 1,
**characterised in that** the real image camera (10) and the thermal camera (12) are oriented in such a manner that their optical axes extend collinearly to each other at least in sections.

3. The apparatus (708) according to one of Claims 1 or 2,
**characterised in that** the real image camera (10) and the thermal camera (12) are separately formed, wherein the real image camera (10) and/or the thermal camera (12) each is/are vertically movable by means of a motor drive, and/or is/are pivotably mounted about an axis of rotation which extends vertically to an optical axis of the thermal camera (12) and/or of the real image camera (10).

4. The apparatus (570, 708) according to one of Claims 1 to 3,
**characterised in that** the thermal camera (12) is oriented in such a manner that sections of its optical axis extend vertically to the optical axis of the real image camera (10) in order to directly superimpose the contours of the thermal image and the real image, and the optical axis of the thermal camera (12) is deflected via a mirror (579, 720).

5. The apparatus (708) according to Claim 1,
**characterised in that** the stereo camera is configured as an infrared camera and no overlap exists between a detectable spectrum of the stereo camera and a detectable spectrum of the thermal camera (12).

6. A method for identifying a person, comprising the steps:
capturing a reflectance image (38) of a face (14) of the person in the visible spectrum by means of a real image camera (10),
capturing an infrared emission image (40) of the face (14) of the person by means of a thermal camera (12), wherein the real image camera (10) and the thermal camera (12) are vertically moved together while being coupled to each other at a constant relative distance,
simultaneous capturing of the same image area by means of the real image camera (10) and the thermal camera (12),
transmitting the reflectance image in the form of reflectance image data (20) to a real image evaluation section (16), and
transmitting the infrared emission image (40) in the form of infrared image data (22) to an infrared image evaluation section (18),
at least partially superimposing the reflectance image data (20) and the infrared image data (22) in order to detect whether the image data originate from a living face,
vertically orienting a stereo camera to the real image camera (10),
determining a position and a size of the person and of the person's head by means of the stereo camera,
transmitting characteristic data for the position and the size of the head to a camera controller which is connected to the motor drives of the real image camera (10) and the thermal camera (12), and
controlling the motor drives of the camera controller in such a manner that the image areas of the real image camera and the thermal camera (12) cover the person's head, determining of first biometric features (24) of the face (14) from the reflectance image data (20),
receiving of a reference image (30) with a personal identification (36),
determining second biometric features (32) from said reference image (30),
providing the personal identification if the first and the second biometric features coincide to a predetermined degree,
determining a temperature distribution (34) from the infrared image data (22),
determining whether the temperature distribution (34) is at least partially approximating a temperature distribution in the face of a living person, by determining whether a temperature value (60) among the temperature distribution (34) does not deviate by more than a predetermined temperature tolerance value from a predetermined temperature threshold value, and in this case
instructing to output the personal identification (36).

7. The method according to Claim 6, comprising the steps:
determining a position each of at least one distinct feature in the face (14) from the reflectance image data, and
transmitting this/these position/s to the infrared image evaluation section (18),
wherein the temperature value at at least one of these positions does not deviate from the predetermined temperature threshold value by more than the predetermined temperature tolerance value.

8. The method according to Claim 7,
**characterised in that** the distinct feature in the face (14) is one out of the following group: an eye (62), a nose (64), a mouth (66), a cheek (68) or a forehead (70) of the person.

9. The method according to one of Claims 6 to 8, provided they are related to Claim 6,
**characterised in that** the temperature threshold value amounts to 35 to 38°C and the temperature tolerance value amounts to 6 to 10°C.

10. The method according to one of the previous Claims 6 to 9, comprising the step:
orienting the real image camera (10) and the thermal camera (12), wherein their optical axis extend collinearly to each other at least in sections.

11. The method according to one of the previous Claims 6 to 10, comprising the step/the steps:
moving the real image camera (10) and the thermal camera (12) each in the vertical direction by means of a motor drive, and/or
pivoting the real image camera (10) and/or the thermal camera (12) about an axis of rotation which extends vertically to an optical axis of the real image camera (10) and/or the thermal camera (12).

12. A system for identifying a person, comprising:
an apparatus for identifying a person according to one of Claims 1 to 6, and
at least one exit door (710) at which a real image camera (10) according to Claim 1 and/or a thermal camera (12) according to Claim 1 are arranged.

13. The system according to Claim 12, wherein the apparatus for identifying a person is an apparatus according to one of Claims 10 or 11, comprising:
a vertically oriented arched portion (724) with a centre part (726),
wherein a horizontally oriented linear motor system (728) is arranged at the centre part (726), and
wherein a stereo camera (722) is connected to the centre part of the arched portion via the linear motor system,
wherein the linear motor system (728) is adapted to horizontally move the stereo camera (722).

14. A data carrier on which a computer program product with program code parts for executing the steps according to one of Claims 6 to 11 is stored.

## Revendications

1. Dispositif (8, 550, 560, 570, 580, 708) destiné à identifier une personne, comprenant :
- une caméra à images réelles (10) pour acquérir une image réfléchie (38) d'un visage (14) de la personne dans le domaine spectral visible,
- une caméra à images thermiques (12) pour acquérir une image d'émission infrarouge (40) du visage (14) de la personne,
- une unité d'évaluation d'images réelles (16) et
- une unité d'évaluation d'images infrarouges (18),
dans lequel la caméra à images réelles (20) est conçue pour transmettre l'image réfléchie sous la forme de données d'image réfléchie (20) à l'unité d'évaluation d'images réelles (16), et la caméra à images thermiques (12) est conçue pour transmettre l'image d'émission infrarouge (40) sous la forme de données d'image infrarouge (22) à l'unité d'évaluation d'images infrarouges (18),
dans lequel l'unité d'évaluation d'images réelles (16) est conçue pour
déterminer de premières caractéristiques biométriques (24) du visage (14) à partir des données d'image réfléchie (20),
recevoir une image de référence (30) contenant une identification de la personne (36),
déterminer de secondes caractéristiques biométriques (32) à partir de cette image de référence (30, et,
si les premières et les secondes caractéristiques biométriques présentent un degré de concordance prédéterminé, fournir l'identification de la personne (36) à une commande de sortie (42), et dans lequel l'unité d'évaluation d'images infrarouges (18) est conçue pour déterminer une répartition de températures (34) à partir des données d'image infrarouge (22) et pour déterminer si la répartition de températures (34) est au moins approchante au moins partiellement d'une répartition de températures sur le visage d'une personne vivante, l'unité d'évaluation d'images infrarouges (18) déterminant pour ce faire si une valeur de température (60) de la répartition de températures (34) ne s'écarte pas d'une valeur seuil de température prédéterminée de plus d'une valeur de tolérance de température prédéterminée et, si tel est le cas, donner instruction à la commande de sortie (42) de délivrer l'identification de la personne (36),
dans lequel la caméra à images réelles (10) et la caméra à images thermiques (12) sont couplées entre elles, et une distance relative entre la caméra à images réelles (10) et la caméra à images thermiques (12) est constante,
la caméra à images réelles (10) et la caméra à images thermiques est conçues pour acquérir en même temps la même région d'image et/ou les données d'image réfléchie (20) et les données d'image infrarouge (22) sont évaluées en même temps dans l'unité d'évaluation d'images réelles (16) et l'unité d'évaluation d'images infrarouges (18), respectivement, et dans lequel
les données d'image réfléchie (20) et les données d'image infrarouge (22) sont superposées au moins partiellement pour détecter si les données d'image proviennent d'un visage vivant,
**caractérisé en ce que** le dispositif comprend en outre une caméra stéréo qui est orientée perpendiculairement à la caméra à images réelles (10) et qui est conçue pour déterminer une position et une taille de la personne et d'une tête de la personne et transmettre des données caractéristiques de la position et de la taille de la tête à une commande de caméra reliée aux entraînements moteurs de la caméra à images réelles (10) et de la caméra à images thermiques (12), et dans lequel la commande de caméra est conçue pour commander les entraînements moteurs de la caméra à images réelles (10) et de la caméra à images thermiques (12) de telle sorte que la région d'image de la caméra à images réelles (10) et de la caméra à images thermiques (12) comprenne la tête de la personne, la caméra à images réelles (10) et la caméra à images thermiques (12) étant déplaçables ensemble verticalement.

2. Dispositif (580) selon la revendication 1,
**caractérisé en ce que** la caméra à images réelles (10) et la caméra à images thermiques (12) sont orientées de telle sorte que leur axes optiques soient colinéaires au moins sur certaines parties.

3. Dispositif (708) selon l'une des revendications 1 ou 2,
**caractérisé en ce que** la caméra à images réelles (10) et la caméra à images thermiques (12) sont réalisées séparément, la caméra à images réelles (10) et/ou la caméra à images thermiques (12) étant montées déplaçables verticalement et/ou pivotantes autour d'un axe de rotation s'étendant perpendiculairement à un axe optique de la caméra à images thermiques (12) et/ou de la caméra à images réelles (10), au moyen d'un entraînement moteur.

4. Dispositif (570, 708) selon l'une des revendications 1 à 3,
**caractérisé en ce que** la caméra à images thermiques (12) est orientée de telle sorte que son axe optique s'étende sur certaines parties perpendiculairement à l'axe optique de la caméra à images réelles (10), pour superposer directement l'image thermique et l'image réelle avec leurs contours, et l'axe optique de la caméra à images thermiques (12) est dévié par un miroir (579, 720).

5. Dispositif (708) selon la revendication 1,
**caractérisé en ce que** la caméra stéréo est réalisée sous la forme d'une caméra infrarouge, et qu'il n'existe aucun recouvrement entre un domaine spectral détectable de la caméra stéréo et un domaine spectral détectable de la caméra à images thermiques (12).

6. Procédé destiné à identifier une personne, comprenant les étapes consistant à :
acquérir une image réfléchie (38) d'un visage (14) de la personne dans le domaine spectral visible au moyen d'une caméra à images réelles (10),
acquérir une image d'émission infrarouge (40) du visage (14) de la personne au moyen d'une caméra à images thermiques (12), la caméra à images réelles (10) et la caméra à images thermiques (12) étant couplées entre elles et déplaçables ensemble verticalement à une distance relative constante,
acquérir en même temps la même région d'image par la caméra à images réelles (10) et la caméra à images thermiques (12),
transmettre l'image réfléchie sous la forme de données d'image réfléchie (20) à une unité d'évaluation d'images réelles (16) et
transmettre l'image d'émission infrarouge (40) sous la forme de données d'image infrarouge (22) à une unité d'évaluation d'images infrarouges (18),
superposer au moins partiellement les données d'image réfléchie (20) et les données d'image infrarouge (22) pour détecter si les données d'image proviennent d'un visage vivant,
orienter une caméra stéréo perpendiculairement à la caméra à images réelles (10),
déterminer, avec la caméra stéréo, une position et une taille de la personne et d'une tête de la personne,
transmettre des données caractéristiques de la position et de la taille de la tête à une commande de caméra reliée aux entraînements moteurs de la caméra à images réelles (10) et de la caméra à images thermiques (12), et
commander des entraînements moteurs de la commande de caméra de telle sorte que la région d'image de la caméra à images réelles (10) et de la caméra à images thermiques (12) comprenne la tête de la personne, déterminer de premières caractéristiques biométriques (24) du visage (14) à partir des données d'image réfléchie (20),
recevoir une image de référence (30) avec une identification de la personne (36),
déterminer de secondes caractéristiques biométriques (32) à partir de cette image de référence (30),
fournir l'identification de la personne si les premières et les secondes caractéristiques biométriques présentent un degré de concordance prédéterminé,
déterminer une répartition de températures (34) à partir des données d'image infrarouge (22),
déterminer si la répartition de températures (34) est au moins approchante au moins partiellement d'une répartition de températures sur le visage d'une personne vivante, en déterminant si une valeur de température (60) de la répartition de températures (34) ne s'écarte pas d'une valeur seuil de température prédéterminée de plus d'une valeur de tolérance de température prédéterminée et, si tel est le cas,
donner instruction de délivrer l'identification de la personne (36).

7. Procédé selon la revendication 6, comprenant les étapes consistant à :
déterminer une position d'au moins une caractéristique marquée dans le visage (14) à partir des données d'image réfléchie et
transmettre cette/ces position(s) à l'unité d'évaluation d'images infrarouges (18),
dans lequel la valeur de température à au moins une de ces positions ne s'écarte pas de la valeur seuil de température prédéterminée de plus de la valeur de tolérance de température prédéterminée.

8. Procédé selon la revendication 7,
**caractérisé en ce que** la caractéristique marquée dans le visage (14) est une caractéristique appartenant au groupe suivant : un oeil (62), un nez (64), une bouche (66), une joue (68) ou un front (70) de la personne.

9. Procédé selon l'une des revendications 6 à 8, si elles font référence à la revendication 6,
**caractérisé en ce que** la valeur seuil de température est de 35 à 38 degrés Celsius et la valeur de tolérance de température de 6 à 10 degrés Celsius.

10. Procédé selon l'une des revendications précédentes 6 à 9, comprenant l'étape consistant à :
orienter la caméra à images réelles (10) et la caméra à images thermiques (12), leurs axes optiques étant colinéaires au moins sur certaines parties.

11. Procédé selon l'une des revendications précédentes 6 à 10, comprenant l'étape/les étapes consistant à :
déplacer la caméra à images réelles (10) et la caméra à images thermiques (12) dans la direction verticale chaque fois au moyen d'un entraînement moteur et/ou
faire pivoter la caméra à images réelles (10) et/ou la caméra à images thermiques (12) autour d'un axe de rotation s'étendant perpendiculairement à un axe optique de la caméra à images thermiques (12) et/ou de la caméra à images réelles (10).

12. Système destiné à identifier une personne, comprenant
un dispositif destiné à identifier une personne selon l'une des revendications 1 à 6 et
au moins une porte de sortie (710) sur laquelle sont disposées une caméra à images réelles (10) selon la revendication 1 et/ou une caméra à images thermiques (12) selon la revendication 1.

13. Système selon la revendication 12, dans lequel le dispositif destiné à identifier une personne est un dispositif selon l'une des revendications 10 ou 11, comprenant
une section en forme d'arc (724) orientée verticalement, présentant une partie centrale (726),
dans lequel un système de moteur linéaire (728) orienté horizontalement est disposé sur la partie centrale (726), et
dans lequel une caméra stéréo (722) est reliée à la partie centrale de la section en forme d'arc par le système de moteur linéaire,
dans lequel le système de moteur linéaire (728) est conçu pour déplacer horizontalement la caméra stéréo (722).

14. Support de données sur lequel est enregistré un produit programme d'ordinateur avec des parties de code de programme destinées à exécuter les étapes selon l'une des revendications 6 à 11.
